# EUROPÄISCHE PATENTSCHRIFT

(11) **EP 1 684 916 B1**
(45) Veröffentlichungstag und Bekanntmachung des Hinweises auf die Patenterteilung: **06.03.2013**
(21) Anmeldenummer: 04797252.6
(22) Anmeldetag: 18.11.2004
(51) Int. Cl.: B05D 7/24, B65G 15/32

(54) **PLASMABESCHICHTETES TRANSPORTBAND**
PLASMA-COATED CONVEYOR BELT
BANDE DE TRANSPORT A REVETEMENT PLASMA

(30) Priorität: 18.11.2003 CH 197403
(43) Veröffentlichungstag der Anmeldung: 02.08.2006
(73) Patentinhaber: Habasit AG, 4153 Reinach (CH)
(72) Erfinder: VON GELLHORN, Edgar, CH-5643 Sins (CH); DAHLMANN, Rainer, 52064 Aachen (DE); VELTEN, Brigitte, CH-8102 Oberengstringen (CH)
(74) Vertreter: Bohest AG
(86) Internationale Anmeldenummer: PCT/CH2004/000695
(87) Internationale Veröffentlichungsnummer: WO 2005/049227

(56) Entgegenhaltungen:
- EP-A- 0 487 059
- EP-A- 0 667 309
- EP-A- 1 063 448
- GB-A- 1 402 275
- US-A1- 2002 142 105

## Beschreibung

Die vorliegende Erfindung betrifft Transportbänder mit oberflächenmodifizierenden Deckschichten.

Transportbänder enthalten in der Regel eine Folie aus einem schmelzbaren Thermoplasten oder thermoplastischen Elastomeren, damit die beiden Enden des Transportbandes über einen kombinierten Schmelz- und Schweissprozess unter Bildung eines endlosen Transportbandes verbunden werden können. Die schmelzbare Folie bildet gleichzeitig die Bandoberfläche, auf der das zu transportierende Gut befördert wird. Um die Bandoberfläche je nach gefordertem Einsatz zu verändern, z.B. um die Bandoberfläche adhäsiv oder weniger adhäsiv zu machen, ihre Kratzbeständigkeit oder ihre Chemikalienbeständigkeit zu erhöhen, musste bislang immer eine Neuentwicklung der thermoplastischen Folie durchgeführt werden.

Um diese Neuentwicklung zu vermeiden, wurden in einigen Fällen bereits oberflächenmodifizierende Deckschichten (z.B. aus Teflon) auf Transportbänder aufkaschiert oder aufkalandriert. Die GB-A-1 402 275 offenbart Transportbänder, die eine Deckschicht aus einem Polyolefin, insbesondere Polytetrafluorethylen, aufweisen. Das Problem bei einer solchen Oberflächenmodifikation von Transportbändern ist, dass die Beschichtung auch beim Langzeitbetrieb des Transportbandes und den vielen Biegevorgängen über die Umlenktrommeln sich nicht ablösen darf. Dieses Problem wird dadurch verstärkt, dass das Transportband selber eine gewisse Elastizität aufweisen muss, da die äussere Seite des Transportbandes beim Umbiegen über die Umlenktrommeln gedehnt und gewalkt wird. Diese Dehnungs- und Walkvorgänge müssen von der modifizierenden Deckschicht mitgemacht werden.

Die Beschichtung von starren Gegenständen wie Kunststoffflaschen oder -rohren wird manchmal mittels des Verfahrens der Plasmabeschichtung im Hochfrequenzplasma durchgeführt. Hier stellt sich aber das Problem der ausreichenden Haftung der Beschichtung beim Biegen, Walken oder Dehnen der Unterlage nicht.

Die Hochfrequenz-Plasmabeschichtung von Verpackungsfolien ist ebenfalls bekannt. Verpackungsfolien sind zwar flexibel, aber nicht sehr elastisch (die nach DIN 53 455 gemessenen Elastizitätsmodule von Kunststoffen, die für Verpackungsfolien verwendet werden, z.B. von Polypropylen, liegen typisch bei deutlich über 1000 N/mm²) so dass beim Biegen nur eine geringe Oberflächenausdehnung zu erwarten ist. Desgleichen tritt das Biegen der Folie hier nur einmal, nämlich beim Verpacken der Ware, auf. Die Anforderungen an das Haftvermögen einer Plasmabeschichtung sind daher hier noch nicht mit den Anforderungen für das Haftungsvermögen von Deckschichten bei Transportbändern vergleichbar.

Eine bekannte Schwierigkeit bei der Plasmabeschichtung von Kunststoffen ist die Tendenz der Kunststoffunterlage, unter dem Vakuum, bei dem die Plasmabeschichtung vorgenommen wird, auszugasen und evtl. auch Restgehalte an flüchtigen Monomeren abzugeben. Diese Gase sammeln sich unter der sich bildenden (schlecht gasdurchlässigen) Plasmapolymerschicht an und können eine Schwächung deren Haftung auf der Kunststoffunterlage bewirken. Dieser Effekt verstärkt sich mit zunehmender Dauer der Plasmabeschichtung, da die gebildete Deckschicht mit der Zeit immer dicker und gasundurchlässiger wird. Das Ausgasen lässt sich durch vorgängiges Halten des Kunststoffes für längere Zeit unter Vakuum nur teilweise beheben.

Aufgabe der vorliegenden Erfindung ist es, ein Transportband herzustellen, dessen Oberflächeneigenschaften mittels einer Deckschicht über ein breites Spektrum variierbar sind, ohne dass der eigentliche Transportbandkörper stets neu entwickelt werden muss.

Die Aufgabe wird erfindungsgemäss gelöst durch ein Transportband, das eine mittels Plasmabeschichtung hergestellte Deckschicht umfasst.

Es wurde überraschenderweise gefunden, dass an sich vorbekannte Transportbänder sich mittels Plasmabeschichtung ohne vorgängige Aufrauhung oder Anätzung der Oberfläche der äusseren Schicht zu erfindungsgemässen Transportbändern oberflächenmodifizieren lassen, und dass bei den so modifizierten Transportbänder beim Biegen über Radien von typisch etwa 20 bis 30 mm, wie sie bei den zugehörigen Umlenktrommeln auftreten, auch im Langzeitversuch die Plasmabeschichtung sich nicht vom Transportband löst oder rissig wird.

Der Begriff "Transportbandkörper" bedeutet im Rahmen der vorliegenden Anmeldung das Transportband mit allen seinen möglichen Schichten und Lagen, mit Ausnahme der erfindungsgemäss durch Plasmabeschichtung aufgetragenen Deckschicht. Der Transportbandkörper ist das Ausgangsmaterial für das ebenfalls einen Gegenstand der vorliegenden Anmeldung darstellende Beschichtungsverfahren mittels Plasmabeschichtung.

Die Plasmabeschichtung ergibt auf den erfindungsgemässen Transportbändern eine in der Regel polymere Deckschicht, die mit stofflichen Merkmalen nicht mehr ausreichend charakterisiert werden kann. Insbesondere ist bei polymeren solchen Deckschichten die Struktur des darin enthaltenen Polymers nur noch bedingt aus der Art der eingesetzten Monomeren voraussagbar (bekanntermassen sind auch Monomere der Polymerisation im Plasma zugänglich, die über herkömmliche radikalische oder ionische Polymerisation in Lösung nicht polymerisierbar sind). Der Vernetzungsgrad eines Plasmapolymers ist höher als bei herkömmlichen Polymerisationen; Plasmapolymere sind auch dann deutlich vernetzt, wenn nur Monomere verwendet werden, die bei konventioneller Polymerisation im Wesentlichen unvernetzte Polymere ergeben würden. Der Begriff "durch Plasmabeschichtung hergestellte Deckschicht" umfasst im Rahmen der vorliegenden Anmeldung polymere wie auch nicht polymere, durch Umsetzung von Monomeren in einem Plasma erhältliche und auf dem Transportbandkörper abgelagerte Deckschichten.

Das Verfahrensmerkmal, dass die Deckschicht bei den erfindungsgemässen Transportbändern mittels Plasmabeschichtung hergestellt ist, lässt sich anhand verschiedener Eigenschaften feststellen. Das ist zunächst die für Plasmabeschichtungen typische geringe Dicke, die in der Regel höchstens einige µm beträgt. Durch übliche Verfahren (z.B. Kalandrieren, Extrusionskaschieren) hergestellte Deckschichten weisen demgegenüber Dicken von typisch mindestens einigen Zehntel mm auf. Ein weiteres Merkmal für eine mittels Plasmabeschichtung hergestellte Deckschicht kann ein hoher, nicht von der Art der verwendeten Monomeren abhängender Sauerstoffgehalt der Oberfläche der Deckschicht sein (typisch etwa 10 bis etwa 30 Atom%, oft etwa 20 Atom%, bestimmbar mittels XPS = "X-ray photoelectron spectroscopy"). Dieser Sauerstoffgehalt wird dadurch bewirkt, dass die nach der Plasmareaktion an der Oberfläche der Deckschicht noch vorhandenen freien Radikale (durch die Plasmareaktion bewirkt) mit atmosphärischem Sauerstoff abreagieren. Ein weiteres, generelles Merkmal ist ein hoher Anteil an Vernetzung, der sich darin äussert, dass im Infrarotspektrum Banden von funktionellen Gruppen (z.B. von Carbonyl, C-C-Doppelbindungen, Hydroxyl) gegenüber entsprechenden Banden in konventionellen Polymeren nach kleineren Wellenzahlen hin verschoben und verbreitert sind. Wenn eine durch Plasmabeschichtung hergestellte Deckschicht polymer ist, sind stark verbreiterte Banden im XPS-Spektrum, durch eine Vielzahl von funktionellen Gruppen verursacht, ebenfalls ein charakteristisches Indiz. Ein weiteres Indiz für die Herstellung der Deckschicht durch Plasmabeschichtung kann der typische geringe Gehalt an Poren (in der Fachsprache der Plasmabeschichtungen auch "Pinholes" genannt) sein, der sich in einer geringen Gasdurchlässigkeit (messbar über die Durchlässigkeit D für beispielsweise Sauerstoff) äussert.

Die Dicke der Deckschicht liegt erfindungsgemäss bevorzugt im Bereich von etwa 0,005 bis etwa 10 µm, eher bevorzugt im Bereich von etwa 0,1 bis etwa 5 µm, wobei diese Dicken mittels Rasterkraftmikroskopie gemessen sind.

Der Transportbandkörper besteht bevorzugt an derjenigen Seite, die zu der Deckschicht weist, aus einem Kunststoff mit einem nach DIN 53457 gemessenen Elastizitätsmodul von etwa 200 bis etwa 900 N/mm² (diese Norm ist hiermit in ihrer Gesamtheit durch Bezugnahme eingeschlossen), um die Biegbarkeit des fertigen Transportbandes um die Umlenktrommeln zu gewährleisten. Im Falle eines erfindungsgemässen monolithischen Transportbandes besteht bevorzugt der gesamte Transportbandkörper aus einem solchen Kunststoff. Wenn der Transportbandkörper mehrere Schichten oder Lagen umfasst, besteht bevorzugt eine oberste Schicht oder Lage mit einer Dicke von bevorzugt etwa 1 mm, auf die erfindungsgemäss mittels Plasmabeschichtung eine Deckschicht abgelagert wird, aus einem solchen Kunststoff.

Die Deckschicht der erfindungsgemässen Transportbänder kann unter Verwendung derselben, kontinuierlich arbeitenden Vorrichtungen auf den Transportbandkörper aufgetragen werden, wie sie für die Plasmabeschichtung von Verpackungsfolien eingesetzt werden. Der Transportbandkörper kann dabei von einer unter atmosphärischem Druck stehenden Abwickelrolle entnommen und durch eine Vakuumschleuse oder mehrere hintereinandergeschaltete Vakuumschleusen mit abnehmendem Druck in die Plasmabeschichtungskammer transportiert werden. Der beschichtete Transportkörper kann anschliessend über eine oder mehrere Vakuumschleusen aus der Plasmabeschichtungskammer entnommen werden. Für auf solchen Vorrichtungen durchgeführte Beschichtungsverfahren hat sich in der Technik der Folienbeschichtung der Begriff "air-to-air"-Verfahren eingebürgert. Ein Beispiel für eine nach einem air-to-air-Verfahren kontinuierlich arbeitenden Vorrichtung ist die PS 1010-Anlage der "4th State, Inc.", Belmont, Kalifornien, USA.

Die Plasmabeschichtung wird bevorzugt bei einem Druck in der Beschichtungskammer von etwa 0,01 bis etwa 1 mbar durchgeführt, eher bevorzugt bei etwa 0,1 bis etwa 0,5 mbar, besonders bevorzugt bei etwa 0,2 mbar.

Das erfindungsgemäss zu verwendende Plasma ist bevorzugt einerseits ein Mikrowellenplasma mit Frequenzbereich von etwa 1 bis etwa 10 GHz, eher bevorzugt etwa 1 bis etwa 5 GHz. Theoretisch wären Mikrowellengeneratoren (z.B. Klystrone mit Hohlraumresonatoren) für beliebige Frequenzen aus diesen Bereichen konstruierbar. Aufgrund von gesetzlichen Bestimmungen (Vermeidung der Störung von Radar und Funkverkehr) sind aber oft nur bestimmte, genau definierte Frequenzen aus diesen Bereichen für gewerbliche Zwecke zugelassen. Insbesondere sind deshalb viele im deutschsprachigen Raum erhältliche, für das erfindungsgemässe Plasmabeschichtungsverfahren verwendbare Mikrowellengeneratoren für eine fixe Frequenz von 2,45 GHz ausgelegt. Eine andere Art von erfindungsgemäss bevorzugt verwendetem Plasma ist eine Hochfrequenzplasma von etwa 5 bis etwa 30 MHz, wobei auch hier die Frequenzen auf gesetzlich zulässige Werte (z.B. 13,56 oder 27,12 MHz) beschränkt sein können.

Das so erzeugte Plasma ist ein "kaltes" Plasma mit einer Temperatur von typisch etwa Raumtemperatur bis etwa 350 K. Für die zu beschichtende Oberfläche des Transportbandkörpers kann keine bestimmte Prozesstemperatur angegeben werden, da die Temperatur der Oberfläche mit zunehmender Dauer der Plasmabeschichtung ansteigt.

Das Monomer, das für die Plasmabeschichtung eingesetzt wird, ist nicht kritisch und kann ausschliesslich in Abhängigkeit von den gewünschten Eigenschaften der Deckschicht ausgewählt werden. Das sind beispielsweise alle Monomere, die in der Plasmabeschichtung von Folien zur Anwendung kommen und die bei den gewählten Drücken und Temperaturen genügend flüchtig sind. Bevorzugte Beispiele hierfür sind:
a) Ethen und substituierte Derivate davon wie etwa halogen und/oder trifluormethylsubstituierte Ethene (z.B. 1,1,-Difluorethen, 1,2-Difluorethen, 1,1,2-Trifluorethen, Tetrafluorethen, 1,1,2-Trifluor-2-chlor-ethen Trifluormethylethen, 1,1,2-Trifluor-2-trifluormethyl-ethen oder 1,2-Difluor-1,2-bis(trifluormethyl)-ethen) oder mit n-elektronenziehenden Gruppen substituierte Ethenderivate (z.B. Acrylsäure und ihre Ester, Acrylnitril, Vinylacetat), oder Vinylether;
b) unverzweigte oder verzweigte Alkane mit 2 bis 12, bevorzugt 2 bis 6 Kohlenstoffatomen (z.B. Ethan, Propan, Butan, 2-Methyl-2-propan) oder cyclische Alkane mit 4 bis 7 Kohlenstoffatomen (z.B. Cyclopentan, Cyclohexan);
c) Halogenierte Alkane, worin die Halogenatome aus Fluor und Chlor ausgewählt sind und worin die Summe aus Anzahl Kohlenstoffatome plus Anzahl Fluoratome plus der mit 2 multiplizierten Anzahl Chloratome höchstens 12, bevorzugt höchstens 6 ist (z.B. 1,1,1,-Trifluorethan, Hexafluorpropan und Chlor-fluor-kohlenwasserstoffe wie etwa die Freone);
d) Siliciumhaltige Monomere (bevorzugt z.B. (C₃-C₁₀)-Silane wie etwa Trimethylsilan, Tetramethylsilan, Triethylsilan, Diethyl-vinyl-silan; symmetrische oder unsymmetrische (C₄-C₈)-Siloxane wie etwa Hexamethyldisiloxan = HMDSO, und symmetrische oder unsymmetrische (C₄-C₈)-Silazane wie etwa Hexamethyldisilazan);
e) Acetylen und seine mit unverzweigten oder verzweigten, gewünschtenfalls mit Fluor substituierten Alkylsubstituenten substituierten Derivate, wobei die Gesamtzahl aller Kohlenstoffatome plus aller Fluoratome bevorzugt höchstens 12, eher bevorzugt höchstens 6 ist (z.B. 1-Propyn, 1- oder 2-Butyn, 3,3,3-Trifluor-1-propyn);
f) iso- oder heterocyclische unsubstituierte oder (C₁-C₄)-alkyl- oder (C₂-C₄)-alkenylsubstituierte oder halogensubstituierte Aromaten (z.B. Benzol, Naphtalin, Toluol, Ethylbenzol, Styrol, Divinylbenzol, Xylol, Pyridin, Pyrrol, Thiophen, Anilin, 1,2-, 1,3-, 1,4-Dichlorbenzol, 1,3,5-Trichlorbenzol, Anisol), wobei die Halogensubstituenten bevorzugt aus Fluor und Chlor ausgewählt sind und worin dann die Summe aus Anzahl Kohlenstoffatome plus Anzahl Sauerstoffatome plus Anzahl Stickstoffatome plus Anzahl Fluoratome plus die mit 2 multiplizierte Anzahl Schwefelatome plus die mit 2 multiplizierte Anzahl Chloratome bevorzugt höchstens 12 ist.

Erfindungsgemäss besonders bevorzugte Monomere sind Hexamethylsiloxan (HMDSO), 1,2-Difluorethen, Tetrafluorethylen und Acetylen.

Das Monomer kann bevorzugt in Gasflüssen von etwa 5 bis etwa 100 sccm ("Standardkubikzentimeter pro Minute", "Standard" hat hier die Bedeutung, dass das Volumen als bei 25°C und 1 bar gemessen angenommen wird) in die Plasmabeschichtungskammer eingespiesen werden, wobei aber der Durchlaufgeschwindigkeit des zu beschichtenden Transportbandes sowie der Dicke der zu bildenden Deckschicht Rechnung getragen werden kann. Die oben angegebenen Flüsse sind Richtwerte für Verweilzeiten von typisch 30 Sekunden bis etwa 5 Minuten, bei einer Mikrowellenfrequenz von 2,45 GHz und einer Mikrowellenleistung von 300 W. Es versteht sich, dass aufgrund der Anwendbarkeit der idealen Gasgleichung bei den verwendeten Drücken bei einem bestimmten Gasfluss immer in etwa dieselbe Teilchenzahl Monomer transportiert wird, unabhängig von Art oder vom Molekulargewicht des Monomers.

Es ist erfindungsgemäss auch möglich, zwei oder mehrere verschiedene Monomere gleichzeitig der Plasmabeschichtung zuzuführen. Aufgrund des Mechanismus der Plasmabeschichtung ist es möglich, auch solche Monomere miteinander umzusetzen, von denen man annehmen würde, dass sie bei der "herkömmlichen" Polymerisation nicht copolymerisierbar sind.

Die Dauer der Plasmabeschichtung wird zweckmässig unter Berücksichtigung aller oben diskutierten Parameter und insbesondere unter Berücksichtigung der Reaktivität der Monomere gewählt. Die optimale Reaktionsdauer wird bevorzugt anhand einer Versuchsserie, wo bei gegebenen Monomer(en), Druck, zu beschichtendem Substrat, Apparatur, Mikrowellenfrequenz und -leistung die Reaktionsdauer variiert wird, ermittelt. Ein Richtwert für die Reaktionsdauer kann etwa 30 Sekunden bis etwa 6 Minuten sein.

Die Plasmabeschichtung kann gewünschtenfalls unter gleichzeitigem O₂-Zusatz als Hilfsgas, mit einem Gasfluss von typisch etwa 20 bis 40 sccm, .durchgeführt werden, wodurch in die Deckschicht zusätzliche O-haltige Gruppen (Hydroxyle, Carboxyle, Carbonyle) eingebaut werden. Wenn der Kunststoff der zu beschichtenden Oberfläche des Transportbandkörpers beispielsweise ein Kunststoff mit O- oder N-haltigen funktionellen Gruppen ist (beispielsweise ein Polyurethan, Polyester oder ein Polyamid), wird die Plasmabeschichtung bevorzugt unter O₂-Zusatz durchgeführt, was die Affinität der Deckschicht zu der Oberfläche erhöht. Ein erfindungsgemäss bevorzugtes Monomer, das mit O₂-Zusatz plasmapolymerisiert wird, ist Hexamethyldisiloxan (HMDSO). Andererseits wird, wenn der Kunststoff der zu beschichtenden Oberfläche des Transportbandkörpers im Wesentlichen frei von funktionellen Gruppen ist, wie etwa einem thermoplastischen Polyolefin, die Plasmabeschichtung bevorzugt ohne O₂-Zusatz durchgeführt. Es kann jedoch eine Vorbehandlung der Oberfläche des Transportbandkörpers mit einem O₂- oder Ar-Plasma durchgeführt werden.

Gewünschtenfalls kann die gebildete Deckschicht in bekannter Weise während der Plasmabeschichtung oder in Form einer Nachbehandlung einem Argon-Mikrowellenplasma ausgesetzt werden. Hierdurch werden an der Oberfläche der Deckschicht freie, relativ beständige Radikale erzeugt, die durch Begasen mit einem olefininschen Monomer durch Aufpfropfung weiter polymerisiert können. Andererseits können diese radikalischen Zentren auch anschliessend mit Luftsauerstoff abreagieren, wodurch ein erhöhter Sauerstoffgehalt (d.h. auch eine erhöhte Hydrophilie der Oberfläche) erzielt werden kann.

In einer bevorzugten Ausführungsform umfasst die Deckschicht auf dem erfindungsgemässen Transportband eine ebenfalls durch Plasmabeschichtung hergestellte Unterschicht, die eine von der restlichen Deckschicht verschiedene Zusammensetzung aufweist, und wobei die Deckschicht über die Unterschicht auf den Transportbandkörper zu liegen kommt. Unterschicht und restliche Deckschicht können nacheinander auf den Transportbandkörper aufgetragen werden. Die unterschiedliche Zusammensetzung kann durch Verwendung verschiedener Monomere und/oder anderer Plasmen erreicht werden. Der Begriff "anderes Plasma", wie er im Rahmen der vorliegenden Anmeldung verwendet wird, soll ein Plasma bedeuten, das sich gegenüber einem ersten Plasma durch mindestens einen der Parameter Druck, Temperatur, Strahlungsleistung, Strahlungsfrequenz und/oder der Dauer der Plasmabehandlung unterscheidet und/oder sich vom ersten Plasma hinsichtlich der Art, dem Druck und/oder dem Gasfluss eines allfälligen Comonomeren oder Hilfsgases wie etwa O₂ oder Ar unterscheidet.

Ein bevorzugtes Verfahren zur Beschichtung eines Transportbandkörpers mit einem aus einer Unterschicht und einer Deckschicht bestehenden Schichtverbund kann darin bestehen, dass der Transportbandkörper in Anwesenheit eines in einem ersten Plasma anregbaren gasförmigen Monomeren einem ersten Plasma dergestalt ausgesetzt wird, das das erste gasförmige Monomer zur Bildung einer Unterschicht auf dem Zugbandkörper angeregt wird. Bei diesem ersten Beschichtungsschritt können gewünschtenfalls Hilfsgase und weitere Comonomere eingesetzt werden. In einem zweiten Schritt kann als Alternative entweder:
a) Die Unterschicht in Anwesenheit des oder der gleichen Monomeren wie im ersten Beschichtungsschritt einem zweiten, vom ersten Plasma verschiedenen Plasma unterzogen werden, oder
b) Die Unterschicht in Anwesenheit eines zweiten, vom ersten Monomeren verschiedenen, gasförmigen und in einem Plasma anregbaren Monomeren und gewünschtenfalls unter Mitverwendung von Hilfsgasen einem Plasma ausgesetzt werden. Aus beiden Alternativen a) oder b) wird ein Schichtverbund erhalten, bei dem die Deckschicht mittels der Unterschicht auf dem Transportbandkörper liegt.

Durch einen Schichtverbund, bestehend aus einer Deckschicht und einer Unterschicht, die beide durch Plasmabeschichtung hergestellt sind, können die Oberflächeneigenschaften der erfindungsgemässen Transportbänder, wie bereits aus dem Gebiet der Beschichtung von Folien bekannt, hinsichtlich der Permeationsfähigkeit für Lösungsmittel oder Gase in einer Weise verändert werden, die von den bloss addierten Permeabilitäten der Deckschicht und der Unterschicht abweicht. Die Permeabilitäten solcher Schichtverbunde für Gase und Lösungsmittel sowie die Abhängigkeit dieser Eigenschaften von der Beschichtungsverfahren und der Art der Unterlage sind bei Folien teilweise bereits untersucht worden. Es wird z.B. auf den Artikel "IKV Kolloquium Aachen 2000", Abschnitt 5: "Plasmaunterstützte Schichtabscheidung zur Optimierung von Permeationseigenschaften (Seiten 16-20) verwiesen.

Eine Deckschicht, die eine Unterschicht umfasst, kann auch vorteilhaft sein, wenn die eigentlich gewünschte Deckschicht auf der Oberfläche des Transportbandkörpers nicht ausreichend gut haftet. In diesem Fall kann zunächst mittels Plasmabeschichtung eine erste Lage (eine Unterschicht) auf den Transportbandkörper dergestalt aufgetragen werden, dass sie die Funktion eines Haftvermittlers zwischen dem Material des Transportbandkörpers und der eigentlichen Deckschicht übernehmen kann. Eine solche haftvermittelnde Unterschicht kann z.B. durch Plasmabeschichtung mit HMDSO, gewünschtenfalls unter O₂-Zusatz, erhalten werden. Durch den O₂-Zusatz lassen sich die haftvermittelnden Eigenschaften einer solchen Unterschicht unter Berücksichtigung der Beschaffenheit des Transportbandkörpers und der eigentlichen Deckschicht steuern. Es erscheint denkbar, das Plasmabeschichtungssystem HMDSO / O₂ als stufenlos regulierbares Haftvermittlungssystem zu verwenden, das einerseits die Haftung von polaren oder hydroxylhaltigen Deckschichten auf Polyolefin-Transportbändern und andererseits die Haftung von z.B. Polyolefin- oder Poly(fluoroolefin)-Deckschichten auf etwa Polyurethan-Transportbandkörpern verbessern kann. Es wird der Anteil des Hilfsgases O₂ während der Plasmabeschichtung des HMDSO variiert, wobei auch mit zeitlichen Gradienten des O₂-Anteils gearbeitet werden kann. So kann etwa bei einem Transportbandkörper aus Polyolefin oder mit einer äusseren Schicht aus Polyolefin die haftvermittelnde Schicht anfänglich ohne O₂ aufgetragen werden, um die optimale Haftung auf dem Polyolefin zu ermöglichen, und im Verlaufe der weiteren Plasmabeschichtung des HMDSO kann der zugeführte O₂-Anteil allmählich dergestalt erhöht werden, dass die Unterschicht keine sprungartigen Änderungen der Zusammensetzung aufweist und innerlich optimal haftet, und dass am Schluss der HMDSO-Plasmabeschichtung der zugeführte O₂-Anteil gerade so hoch ist, dass unter Berücksichtigung der Polaritat und Hydrophilie der anschliessend aufzutragenden restlichen Deckschicht deren optimale Haftung auf der Unterschicht gewährleistet ist.

Hinsichtlich der Unterschicht können für die Monomere und Prozessparameter ansonsten dieselben Angaben übernommen werden wie oben für die eigentliche Deckschicht aufgeführt.

Eine chemische Vorbehandlung (z.B. ein Anätzen der Oberfläche) oder mechanische Aufrauhung des Transportbandes vor der Plasmabeschichtung ist erfindungsgemäss nicht erforderlich. Bevorzugt wird aber die Oberfläche des Transportbandes einer vorgängigen Reinigung unterzogen, die Staub sowie Fettfilme entfernt, was beispielsweise durch Waschen mit geeigneten Lösungsmitteln wie etwa Alkoholen oder Perchlorethylen und anschliessendes Trocknen geschehen kann.

Die erfindungsgemässen Transportbänder sind lediglich durch die mittels Plasmabeschichtung hergestellte Deckschicht in ihren Oberflächeneigenschaften in weiten Grenzen variierbar, während der Grundaufbau des Transportbandes mit einer stets gleichbleibenden Transportbandkörper ausgeführt werden kann. Die durch Plasmabeschichtung hergestellten Deckschichten sind stark vernetzt und verleihen den erfindungsgemässen Transportbändern eine gute Beständigkeit gegen Lösungsmittel und gegen Abrieb und machen sie kratzfest. Insbesondere durch Mitverwendung von O₂ als Hilfsgas können stark hydroxylhaltige Deckschichten erzeugt werden, was Transportbänder mit hydrophilen Oberflächen ermöglicht. Andererseits können durch Verwendung von insbesondere fluorierten Monomeren Deckschichten erzeugt werden, die den erfindungsgemässen Transportbändern Chemikalienresistenz oder eine verringerte Adhäsivität (d.h. die Haftung des zu transportierenden Gutes auf der Oberfläche des Transportbandes wird verringert) verleihen.

Die Erfindung wird nun unter Bezugnahme auf die beiliegenden Zeichnungen und die Beispiele weiter erläutert.

Es zeigen:
- Figur 1a: ein erfindungsgemässes monolithisches (d.h. ohne verstärkende textile Lage) Transportband mit einer durch Plasmabeschichtung hergestellten Deckschicht
- Figur 1b: ein erfindungsgemässes monolithisches Transportband mit einer durch Plasmabeschichtung hergestellten Deckschicht und einer durch Plasmabeschichtung hergestellten Unterschicht
- Figur 2: ein erfindungsgemässes gewebeverstärktes Transportband mit einer durch Plasmabeschichtung hergestellten Deckschicht

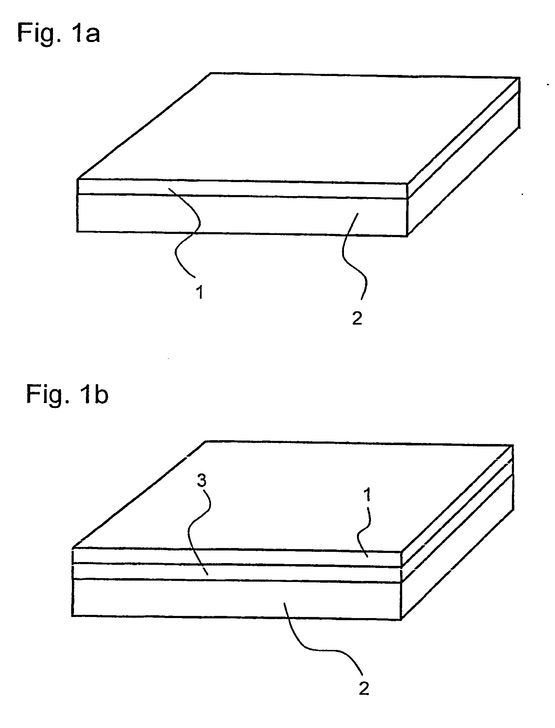

Das Transportband von Figur 1a besteht zunächst aus einer Deckschicht 1 und einem Transportbandkörper 2. Dieser wiederum besteht beispielsweise aus einem kriechfesten, thermoplastischen Kunststoff mit bevorzugt einem Elastizitätsmodul von 200 bis 900 N/m². Der Kunststoff des Transportbandkörpers 2 ist dabei bevorzugt auch so gewählt, dass eine gute Verschweissbarkeit zu einem endlosen Transportband gewährleistet ist. Solche Kunststoffe sind beispielsweise TPE-A, TPE-E oder TPE-U, PE, PA oder EDPM. Die Deckschicht 1 ist aus Tetrafluorethylen, 1,2-Difluorethylen, Acetylen, HMDSO oder HMDSO mit O₂-Zusatz hergestellt. Der Transportbandkörper 2 kann auf der Gegenseite zu der Deckschicht 1 weitere, in der Figur nicht gezeigte Schichten wie etwa eine Reibschicht aus Kautschuk zur Erhöhung der Haftung auf den Umlenktrommeln aufweisen.

Das Transportband von Figur 1b weist gegenüber dem Transportband von Figur 1a eine Deckschicht 1 auf, die wiederum eine Unterschicht 3 von unterschiedlicher Zusammensetzung und/oder Dicke umfasst und insbesondere durch Plasmabeschichtung mit unterschiedlichen Monomeren hergestellt ist. Ansonsten kann das Transportband analog zu dem Transportband von Figur 1a sein.

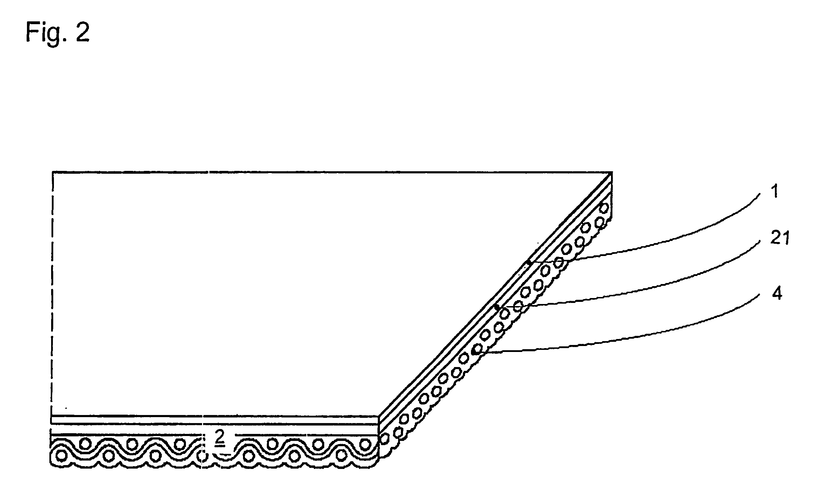

Figur 2 zeigt ein Transportband, das einen Transportkörper 2 umfasst, der im Inneren eine verstärkende Gewebelage 4 aufweist. Der Transportkörper 2 umfasst eine oberste Schicht 21, die beispielsweise eine herkömmliche Schmelzfolie zum Verschweissen des Transportbandes sein kann. Die Schicht 21 kann bevorzugt gleichzeitig eine Kunststoffschicht mit einem Elastizitätsmodul von 200 bis 900 N/mm² sein. Anstelle einer Gewebelage 3 können auch nichtgewebte Lagen wie etwa Gestricke, Gewirke oder Vliese vorgesehen sein. Die Gewebelage 4 kann aus einem Material wie etwa Polyamid 6, Polyamid 66, Polyester, Aramid, Polypropylen oder Baumwolle bestehen.

### Beispiele

### Beispiele 1-1 bis 1-29: Herstellung von Transportbandproben mit einer durch Plasmabeschichtung hergestellten Deckschicht

Vor der Plasmabeschichtung wurde eine Probe von 10x10 cm² Oberfläche eines Transportbandkörpers gemäss Spalte 2 von Tabelle 1 zur Entfernung von Staub mit Isopropanol gereinigt. Gewünschtenfalls wurde die Probe einer Vorbehandlung mit Sauerstoff unter Plasmaanregung durch Mikrowellen unterzogen (sofern in Spalte 3 der Tabelle 1 angegeben). Zur eigentlichen Beschichtung wurde der Transportbandkörper mit dem Monomer und allenfalls dem Hilfsgas mit Gasflüssen gemäss Spalte 4 von Tabelle 1 während eines Zeitraums, wie in Spalte 5 der Tabelle 1 angegeben, beschichtet. Der Gesamtdruck in der Plasmabeschichtungskammer betrug in allen Fällen 0,2 mbar. Die Plasmabeschichtung wurde unter Verwendung eines Mikrowellengenerators mit fester Frequenz von 2,45 GHz (Hersteller Muegge Electronic GmbH, Reichelsheim, Deutschland) durchgeführt, wobei bei einer Leistung gemäss Spalte 6 von Tabelle 1 beschichtet wurde.

Die beobachteten qualitativen Eigenschaften der so aufgetragenen Deckschicht 1 sind in der Spalte 7 der Tabelle 1 aufgeführt, mit Ausnahme der Experimente 1-17, 1-24 und 1-27, wo die erhaltenen Schichten nur die Funktion einer Unterschicht 3 hatten. Untersucht wurde das Aussehen der Deckschicht (von Auge), die Abriebbeständigkeit beim Reiben mit einem Papiertuch (allfällige Beschädigungen der Deckschicht wurden unter dem Mikroskop untersucht) sowie die Haftung beim Biegen der Probe um ein Rohr von 35 mm Durchmesser, wobei die Deckschicht aussen war. Alle erzeugten Deckschichten hatten adhäsionsverringernde Wirkung.

Das Verfahren von Beispiel 1 lässt sich auf ganze Transportbänder unter Verwendung einer kontinuierlich arbeitenden Beschichtungsanlage übertragen, indem die in der Tabelle 1 angegebene Prozessdauer in eine Verweilzeit des zu beschichtenden Abschnittes des Transportbandkörpers in der kontinuierlich arbeitenden Anlage, mit entsprechender Vorschubgeschwindigkeit, umgesetzt wird.

**Tabelle 1**

| Bsp. Nr. | Material des Transportbandkörpers bzw. der obersten Schicht des Transportbandkörpers | O₂-Vorbehandlung ja/nein (bei ja: sccm Gasfluss, min Dauer, Watt Mikrowellenleistung) | Monomer 1 (sccm Gasfluss) : Hilfsgas (sccm Gasfluss) | Bestrahlungsdauer (min) | Bestrah lungsleistung (Watt) | Eigenschaften d. Deckschicht |
|---|---|---|---|---|---|---|
| 1-1 | TPE-U, Shorehärte A92 | nein | HMDSO (20) : O₂(100) | 1 | 250 | guthaftend, abriebbeständig |
| 1-2 | TPE-U, Shorehärte A92, Oberfläche geprägt | nein | HMDSO(20) : O₂(100) | 1 | 250 | guthaftend, abriebbeständig |
| 1-3 | TPE-A | nein | HMDSO(20) : O₂(100) | 1 | 250 | guthaftend, abriebbeständig |
| 1-4 | PU, teilweise quervernetzt | nein | HMDSO(20) : O₂(100) | 1 | 250 | guthaftend, abriebbeständig |
| 1-5 | PVC mit Weichmacher, Shorehärte A85 | nein | HMDSO (20) : O₂(100) | 1 | 250 | guthaftend, abriebbeständig |
| 1-6 | TPE-U, Shorehärte A92 | nein | HMDSO(20) | 6 | 300 | leicht braun, guthaftend, abriebbeständig |
| 1-7 | TPE-O, Shorehärte A92 | nein | HMDSO(20) | 6 | 300 | leicht braun, guthaftend, abriebbeständig |
| 1-8 | TPE-O, Shore- | nein | HMDSO(20) | 6 | 300 | leicht braun, |
| | härte A85 | | | | | guthaftend abriebbeständig |
| 1-9 | TPE-U, Shorehärte A92, Oberfläche geprägt | ja (100, 1, 300) | HMDSO(20) : O₂(100) | 2 | 300 | guthaftend, abriebbeständig |
| 1-10 | TPE-A | ja (100, 1, 300) | HMDSO(20) : O₂(100) | 1 | 300 | guthaftend, abriebbeständig |
| 1-11 | PU, teilweise quervernetzt | ja (100, 1, 300) | HMDSO(20) : O₂(100) | 2 | 300 | guthaftend, abriebbeständig |
| 1-12 | TPE-U, Shorehärte A92 | ja (100, 1, 300) | C₂H₂F₂(30) : Ar(100) | 1 | 300 | braun, guthaftend, abriebbeständig |
| 1-13 | TPE-U, Shorehärte A92, Oberfläche geprägt | ja (100, 1, 300) | C₂H₂F₂(30) : Ar(100) | 0, 5 | 300 | braun, guthaftend, abriebbeständig |
| 1-14 | TPE-A | ja (100, 1, 300) | C₂H₂F₂(30) : Ar(100) | 0, 5 | 300 | guthaftend, abriebbeständig |
| 1-15 | PU, teilweise quervernetzt | ja (100, 1, 300) | C₂H₂F₂(30) : Ar(100) | 1 | 300 | haftend, moderat abriebbeständig |
| 1-16 | PVC mit Weichmacher, Shorehärte A85 | ja (100, 1, 300) | C₂H₂F₂(30) : Ar(100) | 0, 5 | 300 | haftend, abriebbeständig mit Vorbehalt |
| 1-17 | PVC mit Weichmacher, Shorehärte A85 | ja (100, 1, 300) | C₂H₂F₂(30) : Ar(100) | 1 | 300 | - |
| 1-18 | TPE-O, Shorehärte A85 | ja (100, 1, 300) | C₂H₂F₂(30) : Ar (100) | 0,5 | 300 | guthaftend, abriebbeständig mit Vorbehalt |
| 1-19 | TPE-U, Shore- | nein | C₂H₂F₂(30) : Ar(100) | 1 | 300 | braun, |
| | härte A92 | | | | | guthaftend, abriebbeständig |
| 1-20 | TPE-O, Shorehärte A85 | nein | C₂H₂F₂(30) : Ar(100) | 1 | 300 | braun, guthaftend, abriebbeständig |
| 1-21 | TPE-U, Shorehärte A92 | ja (100, 1, 300) | C₂H₂(30) : Ar(100) | 1 | 300 | guthaftend, abriebbeständig |
| 1-22 | TPE-A | ja (100, 1, 300) | C₂H₂(30): Ar(100) | 1 | 300 | guthaftend, abriebbeständig |
| 1-23 | PU, teilweise quervernetzt | ja (100, 1, 300) | C₂H₂(30) : Ar(100) | 1 | 300 | haftend, nicht reibbeständig |
| 1-24 | PU, teilweise quervernetzt | ja (100, 1, 300) | C₂H₂ (30) : Ar (100) | 0, 5 | 300 | -- |
| 1-25 | PVC mit Weichmacher, Shorehärte A85 | ja (100, 1, 300) | C₂H₂(30) : Ar (100) | 1 | | haftend, abriebbeständig mit Vorbehalt |
| 1-26 | TPE-O, Shorehärte A85 | ja (100, 1, 300) | C₂H₂(30) : Ar(100) | 1 | 300 | guthaftend, abriebbeständig |
| 1-27 | TPE-O, Shorehärte A85 | ja (100, 1, 300) | C₂H₂(30) : Ar(100) | 0, 5 | 300 | -- |
| 1-28 | TPE-O, Shorehärte A92 | nein | C₂H₂(30) : Ar(100) | 1 | 300 | guthaftend, abriebbeständig |
| 1-29 | TPE-0, Shorehärte A85 | nein | C₂H₂(30) : Ar(100) | 1 | 300 | guthaftend, abriebbeständig |

### Beispiele 2-1 bis 2-5: Herstellung von Transportbandproben mit einer durch Plasmabeschichtung hergestellten Deckschicht, wobei die Deckschicht eine Unterschicht umfasst.

Zur Herstellung des Ausgangsmaterials (Spalte 2 von Tabelle 2) wurde gemäss dem allgemeinen Beschrieb und Tabelle 1 von Beispiel 1 vorgegangen. Das so erhaltene Zwischenprodukt, das eine Unterschicht (3) aufwies, wurde einer zweiten Plasmabeschichtung unterzogen, wobei die Beschichtungsanlage gleich wie in Beispiel 1 war. Das Monomer und allenfalls das Hilfsgas mit den jeweiligen Gasflüssen waren gemäss Spalte 3 der Tabelle 2, Dauer und Leistung der Mikrowellenbestrahlung waren gemäss Spalten 4 und 5. Der Gesamtgasdruck in der Plasmabeschichtungsanlage war in allen Fällen 0,2 mbar.

Die beobachteten qualitativen Eigenschaften der so aufgetragenen Deckschicht (1) sind in der Spalte 6 der Tabelle 2 aufgeführt (es wurden dieselben Untersuchungen vorgenommen wie in Beispiel 1). Alle erzeugten Schichtverbunde wirkten adhäsionsverringernd.

Das hier beschriebene Verfahren lässt sich auf ganze Transportbänder unter Verwendung einer kontinuierlich arbeitenden Beschichtungsanlage übertragen, wobei das Transportband in zwei Durchgängen durch die kontinuierlich arbeitende Anlage geschickt wird. Im ersten Durchgang wird die Beschichtung gemäss Spalten 3, 4 und 5 von Tabelle 1 aufgetragen, und im zweiten Durchlauf die Beschichtung gemäss Spalten 3, 4 und 5 von Tabelle 2. Siehe auch Schluss von Beispiel 1.

**Tabelle 2**

| Bsp. Nr. | Ausgangsmaterial ist aus Bsp. Nr. | Monomer 2 (sccm Gasfluss 2) : Hilfsgas (sccm Gasfluss) | Dauer Mikrowellenbestrahlung (min) | Leistung Mikrowellenbestrahlung (Watt) | Eigenschaften d. Deck- schicht |
|---|---|---|---|---|---|
| 2-1 | 1-13 | C₂H₂(30) : Ar(100) | 0,5 | 300 | braun, guthaftend, abriebbeständig |
| 2-2 | 1-14 | C₂H₂(30) : Ar(100) | 0, 5 | 300 | guthaftend, abriebbeständig |
| 2-3 | 1-17 | C₂H₂(30) : Ar(100) | 0, 5 | 300 | haftend, abriebbeständig mit Vorbehalt |
| 2-4 | 1-24 | C₂H₂F₂ (30) : Ar(100) | 0,5 | 300 | guthaftend, abriebbeständig |
| 2-5 | 1-27 | C₂H₂F₂(30) : Ar(100) | 0,5 | 300 | braun, guthaftend, abriebbeständig |

## Patentansprüche

1. Transportband umfassend eine Deckschicht (1) und einen Transportbandkörper (2), **dadurch gekennzeichnet, dass** die Deckschicht (1) durch Plasmabeschichtung hergestellt ist.

2. Transportband nach Anspruch 1, **dadurch gekennzeichnet, dass** die Deckschicht (1) eine durch Plasmabeschichtung hergestellte Unterschicht (3) umfasst und mittels dieser Unterschicht (3) auf dem Zugbandkörper (2) haftet.

3. Transportband nach Anspruch 1 oder 2, **dadurch gekennzeichnet, dass** die Deckschicht (1) eine Dicke im Bereich von 0,005 bis 10 µm aufweist.

4. Transportband nach Anspruch 2, **dadurch gekennzeichnet, dass** die Unterschicht (3) eine Dicke von 0,005 bis 10 µm aufweist.

5. Verfahren zur Herstellung einer Deckschicht (1) auf einem Transportbandkörper (2), **dadurch gekennzeichnet, dass** der Transportbandkörper (2) in Gegenwart eines in einem Plasma anlegbaren gasförmigen Monomeren einem Plasma dergestalt ausgesetzt wird, dass das gasförmige Monomer zur Plasmabeschichtung des Zugbandkörper (2) angeregt wird.

6. Verfahren zur Beschichtung eines Transportbandkörpers (2) mit einer Deckschicht (1), die eine Unterschicht (3) umfasst, **dadurch gekennzeichnet, dass** der Transportbandkörper (2) in Anwesenheit eines in einem ersten Plasma anregbaren ersten gasförmigen Monomeren einem ersten Plasma dergestalt ausgesetzt wird, dass das erste gasförmige Monomer zur Bildung einer Unterschicht (3) auf dem Zugbandkörper (2) angeregt wird; und anschliessend entweder
a) die Unterschicht (3) in Anwesenheit des besagten ersten Monomeren einem zweiten, vom ersten Plasma verschiedenen Plasma dergestalt ausgesetzt wird, dass das erste Monomer zur Plasmabeschichtung der Unterschicht (3) angeregt wird, oder
b) die Unterschicht (3) in Anwesenheit eines zweiten, vom ersten Monomeren verschiedenen, gasförmigen und in einem Plasma anregbaren Monomeren einem Plasma dergestalt ausgesetzt wird, dass das zweite Monomer zur Plasmabeschichtung der Unterschicht (3) angeregt wird.

7. Verfahren nach Anspruch 5 oder 6, **dadurch gekennzeichnet, dass** das Plasma oder die Plasmen durch Mikrowellen mit einer Frequenz von 1 bis 10 GHz, oder durch Hochfrequenz mit einer Frequenz von 5 bis 30 MHz erzeugt werden.

8. Verfahren nach einem der vorangehenden Ansprüche 5 bis 7, **dadurch gekennzeichnet, dass** das Monomer oder die Monomere ausgewählt sind aus: Ethen; seinen mit Halogen und/oder mit Trifluormethyl substituierten oder seinen mit π-elektronenziehenden Gruppen substituierten Derivaten; den unverzweigten oder verzweigten Alkanen mit 2 bis 12 Kohlenstoffatomen; den cyclischen (C₄-C₇)-Alkanen; den halogenierten Alkanen, wobei die Halogenatome aus Fluor und Chlor ausgewählt sind und wobei die Summe aus Anzahl Kohlenstoffatome plus Anzahl Fluoratome plus der mit 2 multiplizierten Anzahl Chloratome höchstens 12 ist; den siliciumhaltigen Monomeren, insbesondere den (C₃-C₁₀)- Silanen, (C₄-C₈)-Siloxanen oder (C₄-C₈)-Silazanen; Acetylen und seinen mit unverzweigten oder verzweigten, gewünschtenfalls mit Fluor substituierten Alkylsubstituenten substituierten Derivaten, wobei die Gesamtzahl aller Kohlenstoffatome Kohlenstoffatome plus aller Fluoratome höchstens 12 ist; und den iso- oder heterocyclischen unsubstituierten oder (C₁-C₄)-alkyl- oder (C₂-C₄)-alkenylsubstituierten oder halogensubstituierten Aromaten, wobei die Summe aus Anzahl Kohlenstoffatome plus Anzahl Sauerstoffatome plus Anzahl Stickstoffatome plus Anzahl Fluoratome plus die mit 2 multiplizierte Anzahl Schwefelatome plus die mit 2 multiplizierte Anzahl Chloratome höchstens 12 ist.

9. Verfahren nach Anspruch 8, **dadurch gekennzeichnet, dass** das oder die Monomere aus Tetrafluorethylen, 1,2-Difluorethylen, Acetylen und Hexamethyldisiloxan (HMDSO) ausgewählt werden.

10. Verwendung einer durch Plasmabeschichtung hergestellten Deckschicht (1) zur Erhöhung der Chemikalienbeständigkeit, Lösungsmittelbeständigkeit oder Kratzfestigkeit eines Transportbandkörpers (2), oder zur Verringerung der Adhäsivität eines Transportbandkörpers (2).

## Claims

1. A transport belt comprising a cover layer (1) and a transport belt body (2), **characterised in that** the cover layer (1) is produced by plasma coating.

2. The transport belt according to claim 1, **characterised in that** the cover layer (1) comprises an underlayer (3) produced by plasma coating, and **in that** it adheres by means of this underlayer (3) to the transport belt body (2).

3. The transport belt according to claim 1 or 2, **characterised in that** the cover layer (1) has a thickness in the range of 0.005 to 10 µm.

4. The transport belt according to claim 2, **characterised in that** the underlayer (3) has a thickness of 0.005 to 10 µm.

5. A process for the production of a cover layer (1) on a transport belt body (2), **characterised in that** the transport belt body (2) is exposed in the presence of a gaseous monomer which is excitable in a plasma to a plasma in such a way that the gaseous monomer is excited to plasma-coat the transport belt body (2).

6. A process for the coating of a transport belt body (2) with a cover layer (1) which comprises an underlayer (3), **characterised in that** the transport belt body (2) is exposed in the presence of a first gaseous monomer which is excitable in a first plasma to a first plasma in such a way that the first gaseous monomer is excited to form an underlayer (3) on the transport belt body (2); and then either
a) the underlayer (3) is exposed in the presence of said first monomer to a second plasma different from the first plasma in such a way that the first monomer is excited to plasma-coat the underlayer (3),
or
b) the underlayer (3) is exposed in the presence of a second gaseous monomer being different from the first monomer and being excitable in a plasma to a plasma in such a way that the second monomer is excited to plasma-coat the underlayer (3).

7. The process according to claim 5 or 6, **characterised in that** the plasma(s) is/are generated by microwaves with a frequency of 1 to 10 GHz or by high frequency with a frequency of 5 to 30 MHz.

8. The process according to one of the preceding claims 5 to 7, **characterised in that** the monomer(s) is/are selected from: ethene; its derivatives substituted with halogen and/or with trifluoromethyl, or its derivatives substituted with π-electron-withdrawing groups; the unbranched or branched alkanes with 2 to 12 carbon atoms; the cyclic (C₄-C₇)alkanes; the halogenated alkanes whereby the halogen atoms are selected from fluorine and chlorine and whereby the sum of the number of carbon atoms plus the number of fluorine atoms plus twice the number of chlorine atoms is at the most 12; the silicon-containing monomers, in particular the (C₃-C₁₀) silanes, (C₄-C₈) siloxanes or (C₄-C₈)silazanes; acetylene and its derivatives substituted with unbranched or branched, optionally fluorine-substituted alkyl substituents, whereby the total number of all carbon atoms plus all fluorine atoms is at most 12; and the iso- or heterocyclic unsubstituted or (C₁-C₄)alkyl- or (C₂-C₄) alkenyl-substituted or halogen-substituted aromatics, whereby the sum of the number of carbon atoms plus the number of oxygen atoms plus the number of nitrogen atoms plus the number of fluorine atoms plus twice the number of sulfur atoms plus twice the number of chlorine atoms is at the most 12.

9. The process according to claim 8, **characterised in that** the monomer(s) is/are selected from tetrafluoroethylene, 1,2-difluoroethylene, acetylene and hexamethyldisiloxane (HMDSO).

10. The use of a cover layer (1) produced by plasma coating for increasing the resistance to chemicals, the resistance to solvents or the resistance to scratching of a transport belt body (2), or for reducing the adhesiveness of a transport belt body (2).

## Revendications

1. Bande de transport comprenant une couche de recouvrement (1) et un corps de bande de transport (2), **caractérisée en ce que** la couche de recouvrement (1) est produite par revêtement au plasma.

2. Bande de transport selon la revendication 1, **caractérisée en ce que** la couche de recouvrement (1) comprend une sous-couche (3) produite par revêtement au plasma, et adhère sur le corps de bande de transport (2) au moyen de cette sous-couche (3).

3. Bande de transport selon la revendication 1 ou 2, **caractérisée en ce que** la couche de recouvrement (1) a une épaisseur dans la plage de 0,005 à 10 µm.

4. Bande de transport selon la revendication 2, **caractérisée en ce que** la sous-couche (3) a une épaisseur de 0,005 à 10 µm.

5. Procédé pour la production d'une couche de recouvrement (1) sur un corps de bande de transport (2), **caractérisé en ce que** le corps de bande de transport (2) est exposé en présence d'un monomère gazeux, susceptible d'être excité dans un plasma, à un plasma de telle façon que le monomère gazeux est excité pour le revêtement au plasma du corps de bande de transport (2).

6. Procédé pour le revêtement d'un corps de bande de transport (2) avec une couche de recouvrement (1) qui comprend une sous-couche (3), **caractérisé en ce que** le corps de bande de transport (2) est exposé en présence d'un premier monomère gazeux, susceptible d'être excité dans un premier plasma, à un premier plasma de telle façon que le premier monomère gazeux est excité pour former une sous-couche (3) sur le corps de bande de transport (2), et ensuite
a) soit la sous-couche (3) est exposée en présence dudit premier monomère à un second plasma, différent du premier plasma, de telle façon que le premier monomère est excité pour le revêtement au plasma de la sous-couche (3),
b) soit la sous-couche (3) est exposée en présence d'un second monomère gazeux, différent du premier monomère et susceptible d'être excité dans un plasma, à un plasma de telle façon que le second monomère est excité pour le revêtement au plasma de la sous-couche (3).

7. Procédé selon la revendication 5 ou 6, **caractérisé en ce que** le plasma ou les plasmas sont engendrés par des micro-ondes avec une fréquence de 1 à 10 GHz, ou par des hautes fréquences avec une fréquence de 5 à 30 MHz.

8. Procédé selon l'une des revendications précédentes 5 à 7, **caractérisé en ce que** le monomère ou les monomères sont choisis parmi : éthène ; ses dérivés substitués avec de l'halogène et/ou du trifluorométhyle ou bien ses dérivés substitués avec des groupes rétirant des électrons pi ; alcanes non ramifiées ou ramifiées avec 2 à 12 atomes de carbone, les alcanes cycliques en C₄ à C₇, alcanes halogénés ou les atomes d'halogène sont choisis parmi fluor et chlore, et ou la somme du nombre d'atomes de carbone plus le nombre d'atomes de fluor plus le nombre d'atomes de chlore multiplié par 2 est au maximum égal à 12 ; les monomères contenant du silicium, en particulier les silanes en C₃ à C₁₀, les siloxanes en C₄ à C₈ ou les silazanes en C₄ à C₈ ; acétylène et ses dérivés substitués avec des substituants alkyle non ramifiés ou ramifiés et éventuellement substitués avec du fluor, et ou le nombre total de tous les atomes de carbone plus tous les atomes de fluor est au maximum égal à 12 ; et les aromates isocycliques ou hétérocycliques non substitués ou substitués avec de l'alkyle en C₁ à C₄ ou avec de l'alkényle en C₂ à C₄ ou avec du halogène, dans lesquels la somme du nombre d'atomes de carbone plus le nombre d'atomes d'oxygène plus le nombre d'atomes d'azote plus le nombre d'atomes de fluor plus le nombre d'atomes de soufre multiplié par 2 plus le nombre d'atomes de chlore multiplié par 2 est au maximum égal à 12.

9. Procédé selon la revendication 8, **caractérisé en ce que** le monomère ou les monomères sont choisis parmi tétrafluoroéthylène, 1,2-difluoroéthylène, acétylène et hexaméthyle disiloxane (HMDSO).

10. Utilisation d'une couche de recouvrement (1) produite par revêtement au plasma pour augmenter la résistance aux produits chimiques, la résistance aux solvants ou la résistance aux rayures d'un corps de bande de transport (2), ou pour réduire l'adhésivité d'un corps de bande de transport (2).
